Europäisches Patentamt

European Patent Office

Office européen des brevets

(11) Numéro de publication: **0 296 016**
**A1**

## (12) DEMANDE DE BREVET EUROPÉEN

(21) Numéro de dépôt: **88401368.1**

(22) Date de dépôt: **06.06.88**

(51) Int. Cl.⁴: **G 01 S 1/70**

(30) Priorité: **10.06.87 FR 8708060**

(43) Date de publication de la demande:
**21.12.88 Bulletin 88/51**

(84) Etats contractants désignés:
**CH DE GB IT LI SE**

(71) Demandeur: **COMMISSARIAT A L'ENERGIE ATOMIQUE
31/33, rue de la Fédération
F-75015 Paris (FR)**

(72) Inventeur: **Lerat, Bernard
La Tournette 1B
F-74230 Thones (FR)**

(74) Mandataire: **Mongrédien, André et al
c/o BREVATOME 25, rue de Ponthieu
F-75008 Paris (FR)**

(54) Système de localisation d'un objet dans l'espace.

(57) Système de localisation d'un objet (20) en latitude et longitude. Un miroir (3) tournant (5) et oscillant (11) assure la déviation d'un faisceau laser (2, 22). Un détecteur (21) fixé sur l'objet (20) indique l'instant de localisation. Un écran diffusant et/ou réfléchissant (30) vers un second détecteur (25) et sur lequel des cordes réfléchissantes et/ou diffusantes (38) sont tendues fournit un repérage en latitude et en longitude de la déviation du faisceau.

Application à la robotique.

FIG. 1

EP 0 296 016 A1

## Description

## SYSTEME DE LOCALISATION D'UN OBJET DANS L'ESPACE

La présente invention a pour objet un système de localisation d'un objet dans l'espace au moyen de sa latitude et de sa longitude par rapport à une référence.

Il est connu de localiser dans l'espace un objet portant une source lumineuse à l'aide d'une caméra. La résolution d'un tel système de localisation est liée à celle de la caméra, c'est-à-dire au nombre de pixels que cette dernière peut enregister ; elle peut en outre être détériorée par le fait que plusieurs pixels de la caméra sont excités simultanément, auquel cas il convient de rechercher le barycentre de plusieurs pixels. Si l'on désire localiser un objet dans un champ de 10 mètres d'envergure, il semble, par ce moyen, impossible d'obtenir une résolution meilleure que le centimètre, ce qui est insuffisant dans certaines applications.

Il est également connu de localiser des objets tels que des joints entre pièces à souder en vue de leur soudage robotisé en les balayant par un faisceau laser et en focalisant la tache lumineuse créée par l'impact sur un senseur de position du type diode PIN ; les signaux de localisation sont obtenus à partir du partage des charges entre plusieurs électrodes. Outre le fait que ce système est limité à la localisation d'une coupe plane de l'objet, il présente également une résolution insuffisante pour un champ tel que celui mentionné plus haut.

La présente invention cherche à pallier ces inconvénients.

Le système de localisation selon l'invention comprend un générateur de faisceaux lumineux, un dispositif de déviation du faisceau lumineux en fonction du temps lui faisant assumer les balayages en latitude et en longitude d'un espace où se trouve l'objet, un dispositif de contrôle et de mesure de cette déviation, un détecteur fixé sur l'objet et sensible au faisceau lumineux, ainsi qu'un moyen de détermination de la direction du faisceau lumineux à l'instant où celui-ci sensibilise le détecteur.

La recherche de la position d'un objet dans l'espace nécessite ainsi de placer un moyen de repérage ponctuel sur cet objet et de balayer l'espace jusqu'à retrouver ce moyen de repérage qui émet alors un signal quand il est localisé. Si une localisation précise est désirée, il est nécessaire de prévoir des pas de balayage suffisamment fins. On est alors amené à choisir une fréquence de balayage élevée, ce qui engendre des problèmes de mesure de position, en longitude et latitude, de la direction du faisceau de balayage. La conséquence est une nouvelle incertitude de localisation qui contrarie donc l'objectif qu'on s'était fixé.

La présente invention donne une solution à ce problème et permet de localiser de façon très précise, en latitude et en longitude, un objet se déplaçant dans l'espace sans nécessiter un temps de balayage inacceptable.

A cet effet et suivant la caractéristique importante de l'invention, le dispositif de contrôle et de mesure de la déviation comprend un écran, interposé après le dispositif de déviation qui présente une surface apte à renvoyer une partie au moins du faisceau lumineux diffusée et/ou réfléchie vers un second détecteur sensible au faisceau lumineux pour en déduire des repérages de déviation du faisceau en latitude et en longitude.

Suivant un mode de réalisation préféré de cet écran, il comprend une bordure diffusante et/ou réfléchissante que le faisceau lumineux atteint pour des déviations extrêmes en latitude, et des cordes réfléchissantes vers le second détecteur régulièrement réparties et dont les coordonnées exprimées en latitude et en longutide obéissent à l'équation d'une droite.

Selon un mode de réalisation de l'invention, un balayage à fréquence élevée suivant une direction, appelée ici latitude, est assuré par réflexion du faisceau lumineux incident sur un miroir rotatif en forme de cylindre ayant un polygone régulier pour base et dont la surface latérale est constituée de facettes réfléchissantes tournant autour d'un axe longitudinal de symétrie. Un dispositif faisant osciller le cylindre autour d'un deuxième axe sensiblement colinéaire au faisceau lumineux entre le laser et le miroir assure un balayage en longitude de fréquence plus basse.

La présente invention va maintenant être décrite plus en détail à l'aide des figures suivantes annexées à titre illustratif et nullement limitatif :
- la figure 1 est une vue générale de l'invention,
- la figure 2 est une vue d'un écran de localisation conforme à l'invention,
- la figure 3 représente le balayage en latitude en fonction du temps et les informations recueillies, et
- la figure 4 représente le balayage en longitude en fonction du temps.

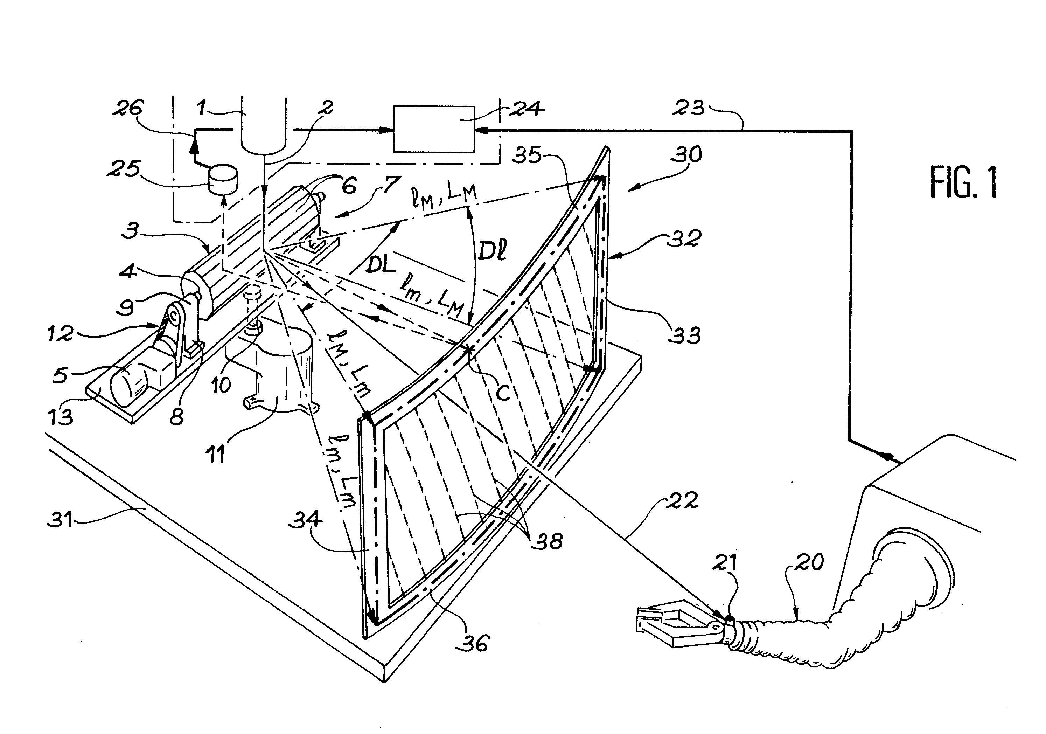

Le système de localisation représenté généralement figure 1 comprend tout d'abord un laser 1 émettant un faisceau 2 vers un miroir 3 qui est en forme de cylindre dont la base est un polygone régulier et qui comprend donc un certain nombre de facettes réfléchissantes. Le miroir 3 tourne autour de son axe longitudinal 4 sous l'action d'un moteur 5 à une vitesse de rotation élevée.

Le faisceau 2 est donc réfléchi sur les facettes du miroir 3 vers une direction variable en fonciton de l'inclinaison de ces facettes 6. Comme le miroir 3 a une forme régulière, le faisceau 2 une fois réfléchi effectue un balayage périodique suivant une direction que l'on appelle ici la latitude et que l'on note généralement l. Le débattement maximal est noté Dl.

Le balayage en direction de l'objet à localiser dans une direction perpendiculaire à la latitude l et appelée donc longitude L est effectué par une rotation de l'axe du miroir 3. Une chape 7 est prévue à cet effet : ses deux branches 8 portent chacune un pivot 9 dans lequel l'axe 4 tourne, alors que son axe de révolution 10 est mû d'un mouvement oscillant à l'aide d'un servo-moteur 11. L'axe 10 est sensiblement colinéaire au faisceau 2 issu du laser 1.

Cette disposition permet au faisceau, après réflexion, de balayer un angle longitudinal DL. La fréquence du balayage longitudinal est très inférieure à celle du balayage en latitude : elle peut être égale à 1 Hz par exemple, à comparer avec une fréquence de 1600 Hz en balayage en latitude que l'on peut obtenir par un miroir 3 comprenant seize facettes 6 et un moteur 5 permettant d'imprimer au miroir 3 une rotation de 6000 tours à la minue, par exemple au moyen d'un système de transmission à courroie et poulies 12. Le moteur 5 est fixé à la chape 7 au moyen d'un support 13 et suit donc en même temps que l'axe 4 les mouvements de celle-ci.

Le faisceau ainsi réfléchi par le miroir 3 sillonne un espace où se trouve un objet 20 à localiser. Cet objet peut être de façon plausible un bras de robot terminé par un outil. On repère l'objet 20 au moyen d'une référence ponctuelle sous forme d'un détecteur 21 sensible au rayonnement lumineux et que le faisceau lumineux dévié 22 atteint quand il emprunte la direction représentée figure 1 et qui correspond à une latitude $l_0$ et à une longitude $L_0$. Le détecteur 21 peut être suivant une réalisation possible de l'invention de nature photovoltaïque et à grand angle de vision ; il émet alors une impulsion à travers une ligne 23 en direction d'une chaîne de mesure 24 qui comprend en particulier un moyen de mesure du temps.

Il s'agit maintenant de relier cette impulsion bien située dans le temps à la latitude et à la longitude $l_0$ et $L_0$. On pourrait penser y parvenir à l'aide de codeurs de position angulaire situés sur le moteur 5 (ou le miroir 3) et le servo-moteur 11 et dont les informations seraient transmises à tout moment à la chaîne de mesure 24. Une telle réalisation ne peut cependant fournir de résultat avec une précision suffisante à cause de difficultés pour régler correctement et synchroniser de tels codeurs et surtout à cause de la rapidité de balayage en latitude.

On emploie donc un système complètement différent. Un écran 30 est ménagé sur le chemin du faisceau lumineux réfléchi entre le miroir 3 et l'objet 20. Il est fixe par rapport au laser 1 et au servo-moteur 11 autour duquel le miroir 3 tourne et est fixé au même bâti 31.

Il se compose d'un cadre réfléchissant et/ou diffusant en inox passivé par exemple, entre les bords extrêmes duquel sont tendues des cordes 38 en acier. Cet écran n'empêche donc pas le faisceau lumineux réfléchi de sillonner l'espace où se trouve l'objet 20.

Le cadre réfléchissant et/ou diffusant 32 se compose de quatre parties : deux bandes 33 et 34 atteintes par le faisceau lumineux quand celui-ci est dévié respectivement suivant une longitude maximale $L_M$ et une longitude minimale $L_m$, et deux bandes 35 et 36 atteintes par le faisceau lumineux quand celui-ci est respectivement dévié suivant une latitude maximale $l_M$ et une latitude minimale $l_m$. Les bandes longitudinales 33 et 34 joignent toutes deux les deux bandes de latitude 35 et 36.

Quand le faisceau lumineux atteint une de ces bandes, par exemple au point référencé C, il est diffusé vers un second détecteur, ou détecteur de codage 25 fixe par rapport au bâti 31 et apte à transmettre une information d'excitation à la chaîne de mesure 24 par une ligne 26. Le cadre 32 peut diffuser le faisceau lumineux directement vers le détecteur de codage 25 ou encore le réfléchir par l'intermédiaire du miroir 3. L'ensemble de l'écran 30 est cylindrique d'axe colinéaire à celui de la chape 7 afin de simplifier le calcul d'interpolation.

De même, les cordes 38 diffusent le faisceau lumineux venant les frapper sur le détecteur de codage 25.

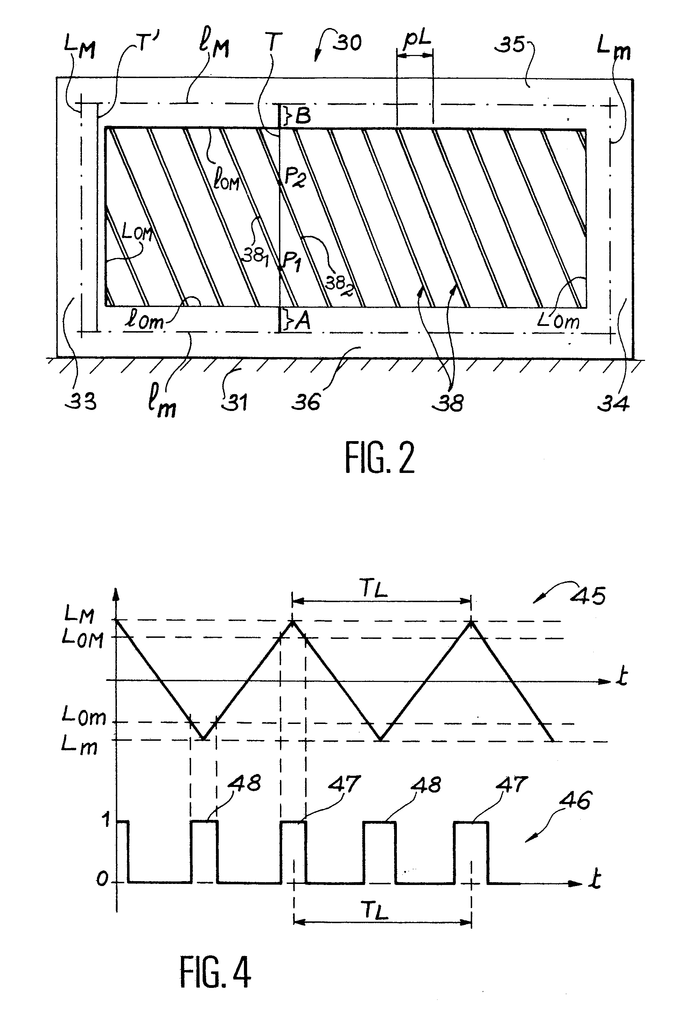

Les cordes 38 sont obliques et joignent pour la plupart d'entre elles les bandes de latitude 35 et 36. Pour une description plus précise, on se reporte toutefois à présent à la figure 2.

On a représenté l'écran 30 suivant une projection plane telle que les points de latitude et de longitude constantes apparaissent respectivement sous forme d'horizontales et de verticales. On voit que, dans cette représentation, les cordes 38 apparaissent rectilignes, parallèles, obliques et régulièrement réparties : les coordonnées de leurs points exprimées en latitude et en longitude obéissent à l'équation d'une droite. Le pas longitudinal entre deux cordes 38 consécutives est noté pL.

Au cours d'un balayage en latitude, le faisceau lumineux parcourt une trajectoire T sur l'écran 30 et qui est une ligne droite presque verticale à cause du balayage longitudinal beaucoup plus lent. La trajectoire T comprend tout d'abord un segment A correspondant à la diffusion du faisceau lumineux sur la bande 36 de latitudes inférieures, puis une partie intermédiaire où le faisceau n'est pas diffusé sauf en deux points $p_1$ et $p_2$ où il est diffusé par deux cordes voisines 381 et 382, et enfin un segment B correspondant à une diffusion du faisceau lumineux par la bande de latitudes supérieures 35.

Comme les cordes 38 sont régulièrement réparties, la plupart des trajectoires T répondent à cette description. La seule exception concerne les trajectoires T' obtenues pour des déviations extrêmes en longitude et pour lesquelles le faisceau lumineux est toujours diffusé par une des bandes longitudinales 33 et 34.

Les segments A et B ont des points dont les coordonnées en latitude sont comprises respectivement entre $l_m$ et $l_{0m}$ et entre $l_{0M}$ et $l_M$, quelle que soit la position longitudinale de ces segments. De plus, les bandes longitudinales 33 et 34 s'étendent en direction des longitudes intermédiaires jusqu'aux longitudes $L_{0M}$ et $L_{0m}$ respectivement. L'espace dans lequel on cherche à localiser l'object 20 au moyen du capteur 21 est donc limité par les latitudes $l_{0M}$ et $l_{0m}$ et les longitudes $L_{0M}$ et $L_{0m}$.

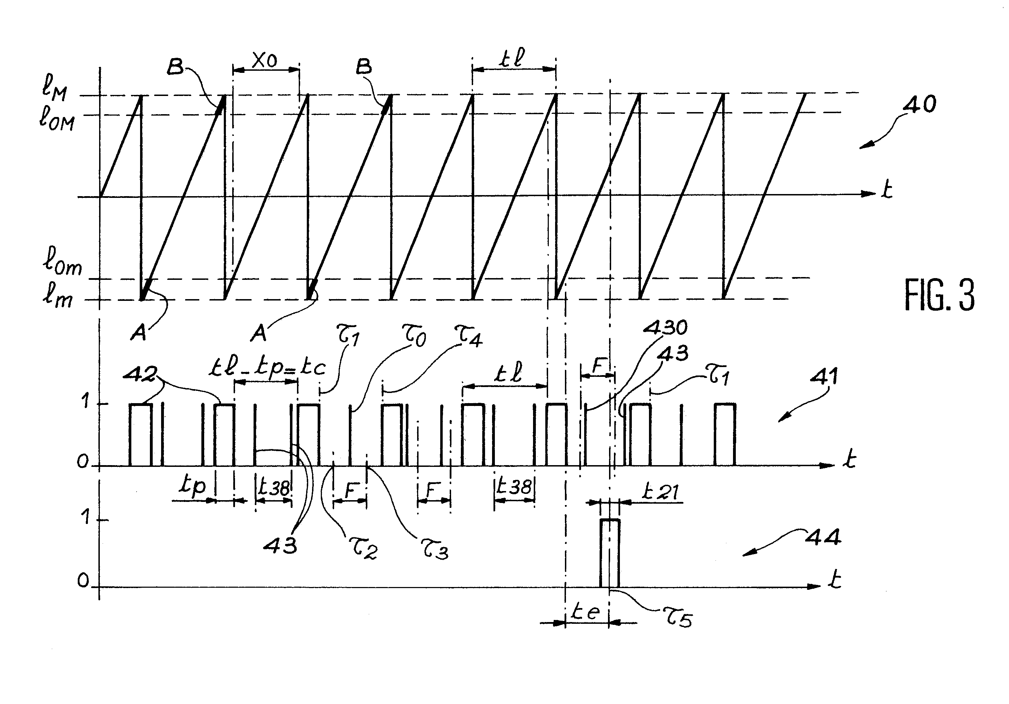

Le déroulement du balayage en latitude est représenté figure 3. Un diagramme 40 en fonction du temps indique la latitude du faisceau lumineux réfléchi par le miroir 3. Un diagramme 41 indique la répartition des états excités du détecteur de codage 25 en fonction du temps quand la trajectoire du faisceau lumineux ne passe pas par une des bandes longitudinales 33 et 34. On remarque que la rotation des facettes 6 imprime une vitesse de rotation constante au faisceau lumineux entre $l_m$ et $l_M$ suivie d'une retombée brusque à $l_m$ quand le faisceau est réfléchi par une facette voisine. Il en résulte que le parcours d'un segment B suivant une

# 0 296 016

trajectoire T est immédiatement suivi du parcours du segment A sur la trajectoire suivante. Ceci se traduit, du point de vue du détecteur de codage 25, par des paliers temporels 42 dont la durée est notée tp et régulièrement répartis puisque la vitesse de balayage en latitude est constante et de période tl.

Au cours des intervalles de temps $tc = (tl-tp)$ entre deux paliers 42, le détecteur de codage 25 est encore excité, suivant des impulsions très brèves 43, à cause de la diffusion du faisceau lumineux due aux cordes 38. Dans un intervalle de temps tc, l'intervalle $t_{38}$ entre deux impulsions 43 est constant car les cordes 38 sont régulièrement réparties. Dans cette réalisation particulière de l'invention, où l'inclinaison des cordes 38 entre les bandes de latitudes extrêmes 35 et 36 est égale à 2.pL, on trouve généralement deux impulsions 43 dans un intervalle tc, sauf un cas particulier où l'on n'en trouve qu'une au milieu de cet intervalle tc.

Les paliers 42 et les impulsions 43 fournissent un code de localisation.

Quand le détecteur 21 est atteint par le faisceau lumineux, il émet en effet une impulsion de durée $t_{21}$ (représentée sur le diagramme 44) inférieure à la durée tc. La chaîne de mesure 24 mesure alors la durée te comprise entre l'instant $\tau_1$ de la fin du palier 42 immédiatement précédent et l'instant $\tau_5$ qui est l'instant moyen de l'impulsion fournie par le détecteur 21. La latitude $l_0$ du détecteur 21 peut être obtenue par la formule :

$$l_0 = l_{Om} + \frac{(te)}{tc}\, (l_{OM} - l_{Om}).$$

Le repérage en longitude se fait de façon un peu différente. On se reporte maintenant simultanément à la figure 4. On y constate que le détecteur de codage 25 est excité pendant des paliers de longue durée 47 et 48 qui se suivent alternativement dans le temps. Les paliers 47 correspondent aux instants où le faisceau se trouve à une longitude supérieure à $L_{OM}$ et les paliers 48 à d'autres instants où le faisceau se trouve à une longitude inférieure à $L_{Om}$. La période de balayage longitudinal est notée TL.

A la fin d'un palier 47, on sait donc que le faisceau lumineux est dévié à la longitude $L_{OM}$ et que cette déviation décroît avec le temps. A la fin d'un palier 48, on sait également que le faisceau lumineux est dévié à une longitude $L_{Om}$ et que cette longitude croît avec le temps. Entre ces deux extrêmes, le repérage longitudinal s'effectue grâce aux cordes 38 comme le montre le diagramme 41. Entre l'instant $\tau_1$ de fin d'un palier 42 et l'instant $\tau_4$ de début du palier 42 suivant, on définit une fenêtre de codage F dont la durée est égale à la moitié de l'intervalle tc et qui est placée symétriquement par rapport aux instants $\tau_1$ et $\tau_4$. Si on note $\tau_2$ et $\tau_3$ les limites temporelles de la fenêtre de codage F, on peut écrire :

$$\tau_2 = \tau_1 + \frac{(\tau_4 - \tau_1)}{4} \qquad \tau_3 = \tau_1 + \frac{3}{4}(\tau_4 - \tau_1)$$

Une impulsion 43 se produit toujours en un instant $\tau_0$ supérieur à $\tau_2$ et inférieur ou égal à $\tau_3$ ; l'impulsion ainsi définie est unique.

La longitude du faisceau peut alors être déterminée à une constante additive près par la formule :

$$L = k.pL + pL. \left( \frac{\tau_0 - \tau_2}{\tau_3 - \tau_2} \right)$$

k est un entier positif dû au fait que les cordes 38 sont régulièrement réparties. La chaîne de mesure 24 peut incrémenter ce nombre à l'aide d'un compteur dès que, par exemple, l'intervalle de temps $(\tau_0 - \tau_2)$ décroît.

La longitude $L_0$ du détecteur 21 correspond à la longitude ainsi calculée pour laquelle on observe simultanément une impulsion sur la ligne 23. L'impulsion pour laquelle il faut alors calculer $L_0$ en appliquant la formule précédente est référencée 430 sur la figure 3.

On constate donc que l'écran 30 permet un positionnement fiable du détecteur 21 dans l'espace. Il suffit de construire la bordure 32 et d'assembler les cordes 38 avec une précision suffisante. Quant à la discrétisation temporelle des diagrammes tels que 41 et 44, elle peut être effectuée avec une précision suffisante dans la gamme des fréquences de balayage en latitude puisqu'on dispose de chaînes de mesure 24 permettant une fréquence de comptage de 5 MHz.

D'autres variantes de réalisation de l'invention peuvent être proposées. Le détecteur 21 pourrait être également un capteur purement optique qui réfléchirait ou diffuserait la lumière du faisceau lumineux vers un détecteur analogue à celui référencé 25 sur la figure 1. Le miroir tournant 3 pourrait être remplacé par un miroir

4

oscillant, au prix cependant d'une fréquence de balayage en latitude nettement plus faible. Enfin, le nombre de cordes 38 traversées au cours d'un balayage en latitude peut être différent de deux car d'autres procédés de comptage au cours d'un balayage entre deux paliers 42 sont possibles.

Une application importante, mais évidemment pas unique, d'un tel système est la robotique.

Si enfin, on désire effectuer un repérage de la position du détecteur 21, et pas seulement de sa direction, il est possible de disposer deux systèmes conformes à l'invention et de combiner leurs informations au moyen d'un système de calcul.

Dans cette réalisation, l'écran 30 est disposé entre le miroir tournant 3 et le détecteur 21 et intercepte la lumière émise vers ce dernier. Il serait possible, sans sortir du cadre de l'invention, d'utiliser un second faisceau lumineux spécialement pour l'écran 30 selon des modalités analogues à celles du brevet britannique 2 085 580. Ce second faisceau serait produit par un autre laser ; les faisceaux différeraient par leur longueur d'onde ou leur direction de polarisation et auraient une partie de trajectoire commune autour du miroir tournant 3 : on disposerait alors par exemple deux miroirs dichroïques en amont et en aval du miroir tournant 3 pour réunir les faisceaux puis pour les séparer, l'écran 30 étant alors à l'écart du faisceau émis vers le détecteur 21. Cette solution n'est toutefois pas favorable parce que l'emploi d'un écran à cordes fines, contrairement aux graduations de ce brevet britannique, permet d'utiliser un faisceau unique pour le repérage de l'objet et la mesure de la déviation, avec un dispositif plus simple et des résultats exacts.

## Revendications

1. Système de localisation d'un objet (20), caractérisé en ce qu'il comprend un générateur (1) émettant un faisceau lumineux (2, 22), un dispositif (3) imprimant au faisceau lumineux une déviation variable en fonction du temps lui faisant effectuer un balayages suivant deux directions, latitude et longitude, d'un espace où se trouve l'objet, un dispositif (30, 25) permettant de mesurer cette déviation, un détecteur (21) fixé sur l'objet (20) et sensible au faisceau lumineux dévié (22), ainsi qu'un moyen (24) de détermination de la direction du faisceau lumineux dévié (22) à l'instant où celui-ci sensibilise le détecteur (21).

2. Système de localisation d'un objet selon la revendication 1, caractérisé en ce que le dispositif (3) imprimant la déviation du faisceau lumineux est un miroir réfléchissant rotatif.

3. Système de localisation d'un objet selon la revendication 2, caractérisé en ce que le miroir (3) est en forme de cylindre ayant un polygone régulier pour base, ayant une surface latérale constituée de facettes réfléchissantes (6) et tournant autour d'un axe longitudinal de symétrie (4).

4. Système de localisation d'un objet selon la revendication 3, caractérisé en ce qu'il comprend un dispositif (11) faisant osciller le cylindre autour d'un deuxième axe (10) sensiblement colinéaire au faisceau lumineux (2) entre le laser (1) et le miroir (3).

5. Système de localisation d'un objet selon l'une quelconque des revendications 1 à 4, caractérisé en ce que le dispositif permettant de mesurer la déviation comprend un écran (30) interposé après le dispositif imprimant la déviation (3) dont une partie de la surface renvoie (32, 38) par réflexion et/ou diffusion le faisceau lumineux dévié (22) vers un second détecteur (25) sensible au faisceau lumineux (22) pour en déterminer la direction du faisceau lumineux dévié (22) suivant des déviations de latitude et de longitude.

6. Système de localisation d'un objet selon la revendication 5, caractérisé en ce que le faisceau lumineux dévié (22) effectue simultanément des balayages périodiques en longitude et en latitude, les balayages en latitude étant de fréquence beaucoup plus élevée que les balayages en longitude, et en ce que la surface réfléchissante et/ou diffusante de l'écran (30) comprend un bordure (35, 36) atteinte par le faisceau lumineux dévié (22) en des déviations extrêmes en latitude ($l_{0m}$, $l_{0M}$).

7. Système de localisation d'un objet selon la revendication 6, caractérisé en ce que la surface réfléchissante et/ou diffusante de l'écran comprend des cordes (38), régulièrement réparties de façon à ce que le faisceau lumineux dévié (22) atteigne au moins l'une d'entre elles au cours d'un balayage en latitude et dont les coordonnées, exprimées en latitude et en longitude, obéissent à l'équation d'une droite.

8. Système de localisation d'un objet selon la revendication 7, caractérisé en ce que les cordes (38) atteintes par le faisceau lumineux dévié (22) au cours d'un balayage (I) en latitude sont au nombre de deux (381, 382).

9. Système de localisation d'un objet selon l'une quelconque des revendications 5 à 8, caractérisé en ce que la surface réfléchissante et/ou diffusante de l'écran comprend une bordure (33, 34) atteinte par le faisceau lumineux dévié (22) pour des déviations extrêmes en longitude ($L_{0M}$, $L_{0m}$).

FIG.1

029601€

FIG. 2

FIG. 4

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 208 559 (SICK) <br> * Page 7, ligne 6 - page 8, ligne 16; figures 2,3 * | 1 | G 01 S 1/70 |
| A | | 2,3,5 | |
| | --- | | |
| Y | DE-A-3 311 349 (MESSERSCHMITT BÖLKOW-BLOHM) <br> * Page 6, ligne 11 - page 7, ligne 22; figures 1,2 * | 1 | |
| | --- | | |
| A | EP-A-0 052 524 (MARCONI) <br> * Figure 1; page 2, ligne 32 - page 3, ligne 19 * | 2 | |
| | --- | | |
| A | GB-A-2 085 580 (CROSSFIELD ELECTRONICS) <br> * Page 3, ligne 20 - page 4, ligne 24; figures 1,3 * | 7-9 | |
| | --- | | |
| A | FR-A-2 516 662 (THOMSON) <br> * Figure 5 * | 6,8 | |
| | --- | | DOMAINES TECHNIQUES RECHERCHES (Int. Cl.4) |
| A | DE-A-1 756 902 (DIETZ et al.) <br> * En entier * | 1-4 | G 01 S <br> G 02 B |
| | ----- | | |

Le présent rapport a été établi pour toutes les revendications

| Lieu de la recherche | Date d'achèvement de la recherche | Examinateur |
|---|---|---|
| LA HAYE | 07-09-1988 | DEVINE J.J |